(19) Europäisches Patentamt
European Patent Office
Office européen des brevets

(11) EP 2 052 008 B1

(12) **EUROPEAN PATENT SPECIFICATION**

(45) Date of publication and mention of the grant of the patent: **10.05.2017 Bulletin 2017/19**

(21) Application number: **07787698.5**

(22) Date of filing: **18.07.2007**

(51) Int Cl.: ***C08G 63/85*** *(2006.01)* ***C08G 69/28*** *(2006.01)*

(86) International application number: **PCT/EP2007/057440**

(87) International publication number: **WO 2008/009708 (24.01.2008 Gazette 2008/04)**

# (54) POSS METAL COMPOUNDS FOR THE MANUFACTURE OF POLYCONDENSATION POLYMERS

POSS-METALLVERBINDUNGEN ZUR HERSTELLLUNG VON POLYKONDENSATIONSPOLYMEREN

COMPOSÉS POSS MÉTALLIQUES POUR LA FABRICATION DE POLYMÈRES DE POLYCONDENSATION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **18.07.2006 US 807625 P**

(43) Date of publication of application: **29.04.2009 Bulletin 2009/18**

(73) Proprietor: **M&G USA Corporation**
**Apple Grove, West Virginia 25502 (US)**

(72) Inventors:
- **AL GHATTA, Hussain**
  **I-03014 Fiuggi (FR) (IT)**
- **ABBENHUIS, Hendrikus Cornelis Louis**
  **NL-5707 HS Helmond (NL)**

(74) Representative: **Gerbino, Angelo et al**
**Jacobacci & Partners S.p.A.**
**Corso Emilia 8**
**10152 Torino (IT)**

(56) References cited:
- **DATABASE WPI Week 200467 Derwent Publications Ltd., London, GB; AN 2004-680336 XP002452581 -& JP 2004 256683 A (MITSUBISHI CHEM CORP) 16 September 2004 (2004-09-16)**
- **DATABASE WPI Week 200365 Derwent Publications Ltd., London, GB; AN 2003-682843 XP002452621 -& JP 2003 040992 A (MITSUBISHI CHEM CORP) 13 February 2003 (2003-02-13)**
- **ABBENHUIS H C L: "ADVANCES IN HOMOGENEOUS AND HETEROGENEOUS CATALYSIS WITH METAL-CONTAINING SILSESQUIOXANES" CHEMISTRY - A EUROPEAN JOURNAL, VCH PUBLISHERS, US, vol. 6, no. 1, 3 January 2000 (2000-01-03), pages 25-32, XP001038449 ISSN: 0947-6539**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 052 008 B1

## Description

Field of Invention

This invention relates to the field of organo-metallic compounds and polycondensation polymer catalysis.

Background

Previously reported Polyhedral OligoSilseSquioxanes (POSS) metal compounds are mainly derived from silsequioxane trisilanols with formula $R_7Si_7O_9(OH)_3$ with the ligand R = cyclopentyl or cyclohexyl. These ligands are generally less soluble than the metal compounds derived thereof.

Routes to the various POSS metal compounds are well described by Feher (Polyhedron 1995, pp. 3239-3253). The amine-assisted metathesis of SiO-H for metal halide bonds is claimed to be an effective method for the synthesis of POSS compounds. Utilizing The amine-assisted metathesis of SiO-H for metal halide bonds, silsequioxane trisilanols with formula $R_7Si_7O_9(OH)_3$ [R = cyclopentyl, cyclohexyl] have been "capped" with a variety of reagents as, for instance: $O{=}VC1_3$, Cyclopentadienyl (Cp) or pentamethyl cyclopentadienyl (Cp*) (Cp*) $ZrCl_3$, $CpTiCl_3$, $CrCl_3(NMe_3)_2$, $MeGeCl_3$, $RSnCl_3$ (R = Me, Ph), $PCl_3$, $AsCl_3$, $SbCl_3$, and $GaCl_3$. This procedure is exemplified in the equation below:

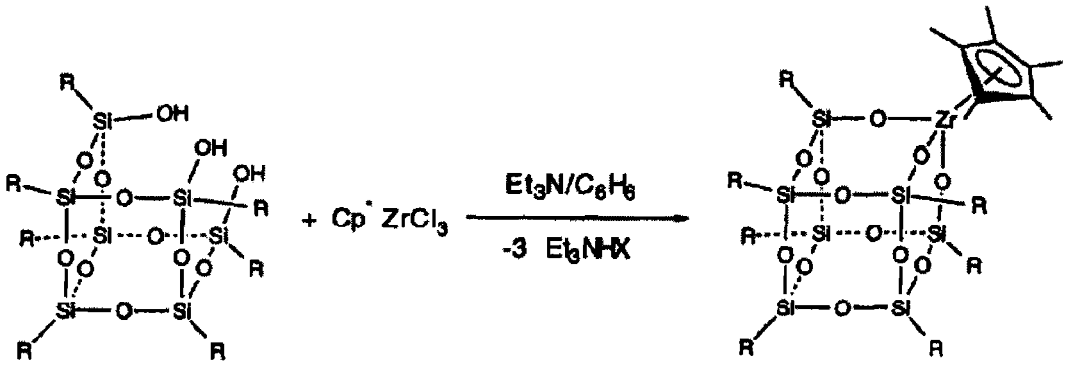


A shortcoming of the most routes is that relatively large amounts of carefully dried, non-protic solvents are needed. In practice, suitable solvents are: pentane, toluene, THF, diethyl ether and dichloromethane. Another shortcoming is that the reaction proceeds with concomitant formation of ammonium salts that have to be removed by a time consuming filtration/extraction step.

Another shortcoming of previously reported routes to POSS metal compounds relates to the fact that they are prepared from a highly diluted solution. As such, Crocker (United States Patent No. 5,750, 741) and others, teach that convenient concentrations are in the region of 0.01 to 0.1 M for $R_7Si_7O_9(OH)_3$ with R = cyclohexyl and in the region of 0.001 to 0.005 M with R = cyclopentyl.

The prior art routes to POSS titanium compounds can be described in the following schematic which also shows the use of non-protic solvents and high dilution of employed reagents

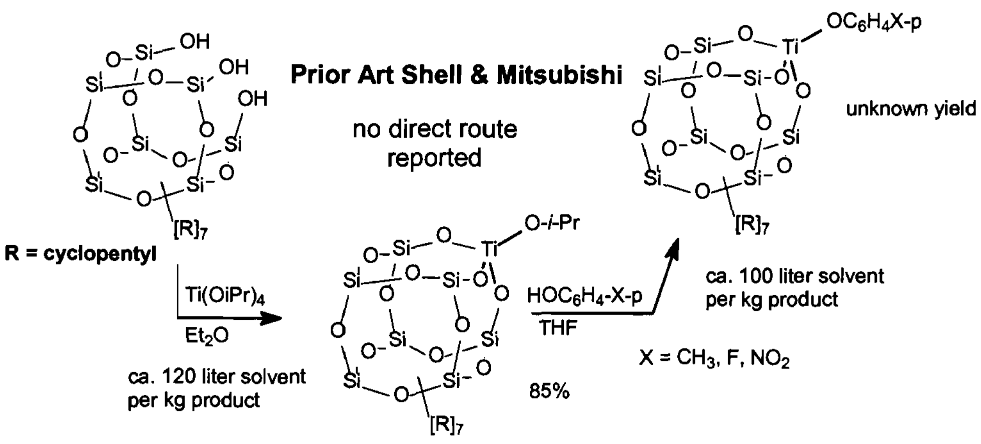


There exists therefore the need for a process to produce POSS metal compounds which has fewer steps and

is more quantitative in its yield.

The use of the prior art POSS metal compounds to catalyze the polycondensation reaction catalysis is deficient. As described in the specification, the types of POSS compounds in the prior art may show catalytic activity, but they produce other deficiencies in the polymer. There exists therefore the need for a polycondensation catalyst which does not unduly yellow the polymer or degrade themselves at polymerization conditions.

Summary

This specification discloses a process for the manufacture of a POSS metal compound comprising the steps of reacting a solution of $R_7Si_7O_9(OH)_3$ with at least one metal alkoxide and separating the solid reaction product from the solution. The specification further discloses that R may be selected from the group of substituents making the $R_7Si_7O_9(OH)_3$ soluble in the solution, wherein R is selected from the group consisting of isobutyl ($i$-$C_4H_9$) and phenyl.

It is also disclosed that the solution of the process comprise a solvent selected from the group of polar, protic and polar aprotic solvents. It is further disclosed that the solvent may be selected from the group consisting of ethanol, isopropanol, acetone, and acetonitrile.

It is also disclosed that the metal alkoxides may be selected from the group consisting of $Ti(O\text{-}i\text{-}Pr)_4$ and $Al(O\text{-}i\text{-}Pr)_3$, where i-Pr is iso-propyl.

This specification also discloses chemical compounds of the formula $R_7Si_7O_{12}TiOH$, $R_7Si_7O_{12}Al$, $(R_7Si_7O_{12})_2Zn_4Me_2$ and R is selected from the group consisting of ($i$-$C_4H_9$) and phenyl.

This specification discloses a polycondensation polymer composition comprising a polycondensation polymer and at least one metal compound selected from the group consisting of $R_7Si_7O_{12}Al$, $R_7Si_7O_{12}TiOH$, $(R_7Si_7O_{12})_2Zn_4Me_2$, $R_7Si_7O_{12}Zr(O\text{-}i\text{-}C_3H_7)$, and $R_7Si_7O_{12}Ge(O\text{-}i\text{-}C_3H_7)$ wherein R is selected from the group consisting of ($i$-$C_4H_9$) and phenyl.

It is further disclosed that the polycondensation polymer be a naphthalate polyester, a phthalate polyester or a polyamide.

It is further disclosed that the polymer composition further comprise a zinc compound.

A process for the polycondensation polymerization of a polycondensation polymer is disclosed comprising the steps of introducing at least one metal compound selected from the group consisting of $R_7Si_7O_{12}Al$, $R_7Si_7O1_2TiOH$, $(R_7Si_7O_{12})_2Zn_4Me_2$, $R_7Si_7O_{12}Zr(O\text{-}i\text{-}C_3H_7)$, and $R_7Si_7O_{12}Ge(O\text{-}i\text{-}C_3H_7)$ wherein R is selected from the group consisting of ($i$-$C_4H_9$) and phenyl into the polycondensation polymer and exposing the polycondensation polymer to a sufficient temperature and sufficient pressure for a time sufficient to raise the intrinsic viscosity 0.05 dl/g.

It is further disclosed that the metal compound of the polycondensation process be selected from the group consisting of $R_7Si_7O_{12}Al$, $R_7Si_7O_{12}TiOH$, $(R_7Si_7O_{12})_2Zn_4Me_2$. $R_7Si_7O_{12}Zr(O\text{-}i\text{-}C_3H_7)$, and $R_7Si_7O_{12}Ge(O\text{-}i\text{-}C_3H_7)$.

It is further disclosed the polycondensation polymer used in the polycondensation process is selected from the group consisting of a naphthalate, phthalate polyester, and a polyamide.

It is further disclosed that polycondensation process have a step where a zinc compound is introduced into the polycondensation polymer.

Detailed Description

It has been discovered that when the substituent R of various silsequioxane trisilanol reactants (POSS reactants) having a formula of $R_7Si_7O_9(OH)_3$ is appropriately varied, the solubility of the reactant is greatly affected. For example, when R = isobutyl or phenyl, the POSS reactant exhibits a high solubility (up to 50 wt % in acetone and isopropanol) while the POSS metal derivative does not. This enables the POSS reactant to be reacted with metal alkoxides and the resulting POSS metal derivative to be precipitated from the solution. This class of POSS metal derivatives has been further found to have improved performance as a polycondensation catalyst over other POSS metal derivatives.

This enhanced manufacturing process is based upon the use of trisilanol of the form $R_7Si_7O_9(OH)_3$. These POSS trisilanol starting materials are available with a limited number of R groups. Historically, only cycloalkyls were known, i.e. cyclohexyl, cyclopentyl, cycloheptyl. These compounds were reported to be soluble in apolar solvents, e.g. chloroform, hexane, toluene and THF and were reported to be insoluble in acetone, acetonitrile, isopropanol, and alcohol (polar solvents). Commercial POSS trisilanols are now available which also have isobutyl, isooctyl or phenyl as their R group. What has been discovered is that the isobutyl and phenyl forms are highly soluble in polar, protic and polar aprotic solvents such as ethanol, isopropanol, acetone, and acetonitrile. It is believed that DMSO and NMP will work as well.

For a compound to be highly soluble in the solvent or solvent mixture, which could be a mixture of solvents, the solvent must be capable of containing at least 50 gms of dissolved compound per 1000 gms of solvent at 50 °C. It is more preferable that the solvent be capable of containing at least 100 gms of dissolved compound per 1000 gms of solvent at 50 °C. It is even more preferable that the solvent be capable of containing at least 150 gms of dissolved compound per 1000 gms of solvent at 50 °C. Another preferred solvent is one that is capable of containing at least 200 gms of dissolved compound per 1000 gms of solvent at 50 °C. As shown in the experimental section, solvents capable

of containing at least 300 gms of dissolved compound per 1000 gms of solvent at 50 °C are functional and also suitable.

The substituent R of the final compound may also be characterized as an R selected from the group consisting of substituents that allow at least one solvent selected from the group consisting of ethanol, isopropanol, acetone, THF, and acetonitrile to contain at least 50 gms of $R_7Si_7O_9(OH)_3$ per 1000 gms of the solvent at 50 °C. It is also preferable that the substituent R be selected from the group consisting of substituents that allow at least one solvent selected from the group consisting of ethanol, isopropanol, acetone, THF, and acetonitrile to contain at least 100 gms of $R_7Si_7O_9(OH)_3$ per 1000 gms of the solvent at 50 °C. It is even more preferable that the substituent R be selected from the group consisting of substituents that allow at least one solvent selected from the group consisting of ethanol, isopropanol, acetone, THF, and acetonitrile to contain at least 150 gms of $R_7Si_7O_9(OH)_3$ per 1000 gms of the solvent at 50 °C. It is also preferable that the substituent R be selected from the group consisting of substituents that allow at least one solvent selected from the group consisting of ethanol, isopropanol, acetone, THF, and acetonitrile to contain at least 200 gms of $R_7Si_7O_9(OH)_3$ per 1000 gms of the solvent at 50 °C. It is also preferable that the substituent R be selected from the group consisting of substituents that allow at least one solvent selected from the group consisting of ethanol, isopropanol, acetone, THF, and acetonitrile to contain at least 250 gms of $R_7Si_7O_9(OH)_3$ per 1000 gms of the solvent at 50 °C. It is also suitable that the substituent R be selected from the group consisting of substituents that allow at least one solvent selected from the group consisting of ethanol, isopropanol, acetone, THF, and acetonitrile to contain at least 300 gms of $R_7Si_7O_9(OH)_3$ per 1000 gms of the solvent at 50 °C.

The synthesis of $(i\text{-}C_4H_9)_7Si_7O_9(OH)_3$ used in the following preparations is well known and is accomplished by base catalyzed hydrolytic condensation of trialkoxysilanes. The details can be found in United States Patent Number 6,972,312.

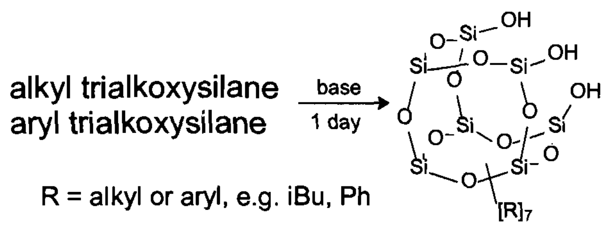


The manufacturing routes used in this specification to make the metal compounds are described below and a one step and two step routes are depicted in the following schematic. While these routes are embodiments, it will be obvious to one of ordinary skill that variations are possible that are still within the scope of the claimed process.

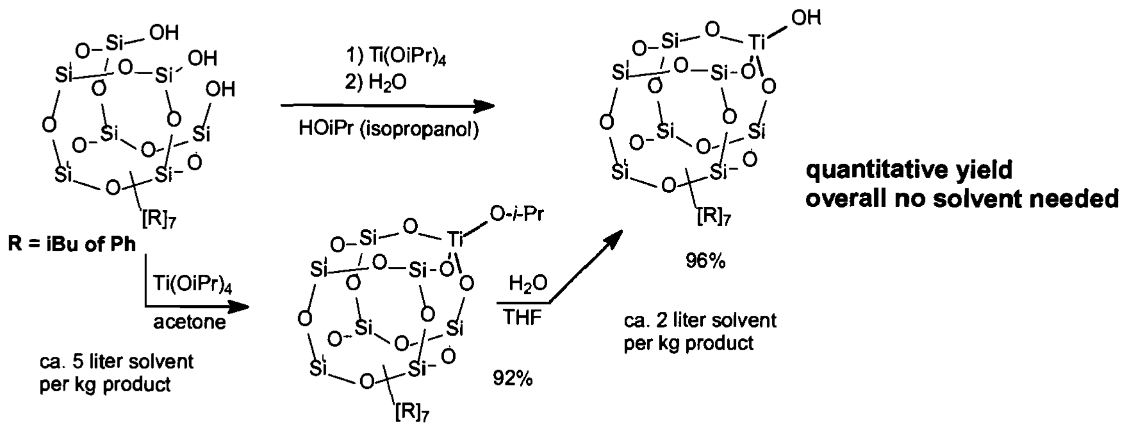


As can be readily seen, the yield is quantitative and relatively simple in process.

Preparation of $(i\text{-}C_4H_9)_7Si_7O_{12}TiOH$ in a two step process

First, $(i\text{-}C_4H_9)_7Si_7O_9(OH)_{12}TiO\text{-}i\text{-}Pr$ was prepared by adding 372 g, (1.31 mol) of $Ti(O\text{-}i\text{-}Pr)_4$ to a heated solution (51 °C) of 1.00 kg, (1.26 mol) Of $(i\text{-}C_4H_9)_7Si_7O_9(OH)_3$ dissolved in 5.0 L of acetone over a period of approximately 2 minutes. The observed reaction was slightly exothermic and precipitation of the solid occurred after 3-15 minutes. The suspension was stirred for another 2 hours and cooled to approximately 16 °C. The solid was isolated by filtration and then dried in a vacuum at 50 °C for 2 days to yield 1036 g (92% yield) of a product with a melt point of 200 °C and

believed to be ($i$-$C_4H_9)_7Si_7O_{12}TiO$-$i$-Pr based on $^1H$, $^{13}C$ and $^{29}Si$ solution NMR.

The ($i$-$C_4H_9)_7Si_7O_{12}TiO$-$i$-Pr was then hydrolyzed to ($i$-$C_4H_9)_7Si_7O_{12}TiOH$ (Labeled as Ti POSS1) by dissolving 418 g (0.47 mol) of the ($i$-$C_4H_9)_7Si_7O)_2TiO$-$i$-Pr in 1.1 L of THF containing 16.8 mL (0.93 mol) of water and allowed to stand overnight. After removal of the solvent in vacuum, the obtained product was a colorless oil. Further drying under vacuum at 50 °C for 24 h rendered odorless product as a viscous oil that solidifies in the course of several days at 20 °C (385 g, 0.45 mol, 96% yield).

Preparation of ($i$-$C_4H_9)_7Si_7O_{12}TiOH$ in a one step process

358 g, (1.26 mol) of Ti(O-$i$-$Pr)_4$ was added to a heated solution (51 °C) of 1.00 kg, (1.26 mol) of ($i$-$C_4H_9)_7Si_7O_9(OH)_3$ dissolved in 5.0 L of isopropanol over a period of approximately 2 minutes. The observed reaction was slightly exothermic and turbidity occurred after ca. 10 minutes. The reaction mixture was stirred for another hour at approximately 40 °C followed by addition of 22.7 mL (1.26 mol) of water. Stirring at 40 °C for 18 hrs rendered a slightly emulsified product solution. After removal of the solvent in vacuum, a colorless oil was obtained. Further drying under vacuum at 50 °C for 24 h rendered an odorless viscous oil that solidified in the course of several days at 20 °C (yield 1075 g, 100% yield).

Preparation of ($i$-$C_4H_9)_7Si_7O_{12}Al$

Aluminum silsesquioxane, ($i$-$C_4H_9)_7Si_7O_{12}Al$, (Labeled Al POSS1) was prepared by purifying and converting aluminum isopropoxide to its liquid trimeric form by distillation at 140 °C, 1.0 mbar. The liquid trimeric form is highly soluble in organic solvents, unlike the solid tetrameric or polymeric forms. The liquid was stored under Argon and slowly solidified.

129 g (0.63 mol) of the liquid trimeric aluminum isopropoxide was added to an approximately 53 °C solution of 500 g (0.63 mol) of ($i$-$C_4H_9)_7Si_7O_9(OH)_3$ dissolved in 1.70 L of acetone. The aluminum silsesquioxane, ($i$-$C_4H_9)_7Si_7O_{12}Al$ precipitated from the yellow solution. The reaction product was separated from the solvent by filtration after cooling the solution and precipitate to 15 °C. After washing with acetone (ca 300 mL) the solid was dried at 50 °C in vacuum. The process yielded 410 g (80%) of a product having a melt point of 271-273 °C.

Preparation of (($i$-$C_4H_9)_7Si_7O_{12})_2Zn_4Me_2$

(($i$-$C_4H_9)_7Si_7O_{12})_2Zn_4Me_2$ (Labeled as Zn POSS1) was prepared by adding $Me_2Zn$ (2.0 M in toluene, 50 mL, 100 mmol) to a cool solution (-20 °C) of ($i$-$C_4H_9)_7Si_7O_9(OH)_3$ (40.0 g, 50 mmol) in toluene (200 mL). The manner of addition was done slowly so that the evolving methane was liberated gently. For this preparation the addition time was approximately 10 minutes. The reaction mixture was stirred at 50 °C for 1 h, and concentrated to a third of its original volume. The mixture was allowed to crystallize at 7 °C to give pure methylzinc silsesquioxane compound (34 g, 19 mmol, 73 %). A second batch was obtained after concentration of the mother liquor (6.0 g, 3.4 mmol, 13 %); total yield: 86%. Mp 200 °C (decomposition, gas formation, no real melting) and still largely solid at 300 °C.

Alternative Preparation of ($i$-$C_4H_9)_7Si_7O_{12}TiOH$.

An alternate route is to react RSi(OR')$_3$ in the presence of LiOH and $TiCl_4$ for one day for an approximately 80% yield. A suspension of LiOH·$H_2O$ (9.8 g, 0.23 mol) and ($i$-$C_4H_9Si(OMe_3)$, 54 g, 300 mmol) in EtOH (100 mL) and $H_2O$ (3.0 mL, 0.16 mol) was stirred overnight at 65°C to produce trisilanol (($C_4H_9)_7Si_7O_9(OH)_3$). A mixture of $TiCl_4$ (11 g, 57 mmol) in precooled (- 20°C) dry EtOH (50 mL) was prepared and the LithiumPOSS mixture was added dropwise to give an exothermic reaction.

After stirring for 5 minutes, hexane (100 mL) and then $H_2O$ (100 mL) were added. The organic layer was separated form the aqueous phase, which was acidic.

The organic phase was washed twice with $H_2O$ (100 mL) and the water layer discarded. The organic layer was evaporated to dryness giving the titanium catalyst as an amorphous foam (22 g, 80%), Mp = 90-120°C). The synthesis works equally well with ($i$-$C_4H_9Si(OEt_3)$ providing a means to recover all solvents in pure form.

The POSS metal compounds made above were evaluated for their ability to be polycondensation catalysts in the melt and solid phase polycondensation reactions.

One class of polycondensation polymers suitable for use of these metals are the phthalate polyesters. A phthalate polyester is a polycondensation polymer made by reacting at least one phthalate with at least one diol. Typically, the starting phthalate is in its acid form, usually a dicarboxylic acid. However, it is well known to use the dimethyl ester derivative of the acid as a starting material as well. The term derived from an acid means that the moiety could be derived from the dimethyl ester as well. For example, a phthalate polymer having 80 mole percent of its acid units derived

terephthalic acid means that it could have been made using terephthalic acid or the dimethyl ester of terephthalic acid or any other equivalent that would place the terephthalate moiety into the polymer chain.

The well-known phthalates are terephthalic acid and its dimethyl ester derivative, isophthalic acid and its dimethyl ester derivative, and orthophthalic acid and its dimethyl ester derivatives. Polyethylene terephthalate, polytrimethylene terephthalate (made from the 1,3 propane diol; also known as PTT), polyethylene isophthalate, polybutylene terephthalate, and a terephthalate polymer with approximately 35 mole percent of its diols derived from cyclohexane dimethanol and 65 mole percent from ethylene glycol (also known as PETG, Eastman Chemical Company, Kingsport Tennessee) are examples of such phthalate polymers. Typically, the phthalate polymers will be copolymers having multiple phthalates and/or diols present. Polyethylene terephthalate modified with 3 mole percent of isophthalic acid is an example, as is polyethylene terephthalate modified with diethylene glycol, as is polyethylene terephthalate modified with 3 mole percent isophthalic acid and diethylene glycol. The phthalate polymer could also contain naphthalate moieties as well. A 95 mole percent terephthalate with 5 mole percent 2,6 naphthalate is an example of this type of phthalate polymer.

A naphthalate polymer is another suitable polycondensation polymer made by reacting at least one naphthalate with at least one diol. The starting naphthalate can be in its acid form, usually a dicarboxylic acid or its ester form. The term derived from an acid is taken to mean therefore that the moiety could be derived from the dimethyl ester as well. For example, a naphthalate polymer having 80 mole percent of its acid units derived from 2,6 naphthalate dicarboxylic acid means that it could have been made using 2,6 naphthalate dicarboxylic acid or 2,6 dimethyl naphthalate or any other equivalent that would place the naphthalate moiety into the polymer chain.

The well-known naphthalates are 2,6 naphthalate dicarboxylic acid and its dimethyl ester derivative and 2,5 naphthalate dicarboxylic acid and its dimethyl ester derivative. Polytrimethylene naphthalate, polybutylene naphthalate, polyethylene naphthalate, are examples of such naphthalate polymers. The naphthalate polymers include copolymers having multiple naphthalates, phthalates and/or diols present. Polyethylene naphthalate modified with 3 mole percent of terephthalate is an example, as is polyethylene naphthalate modified with diethylene glycol, as is polyethylene naphthalate modified with 3 mole percent terephthalate and diethylene glycol.

The term crystallizable polymer means that the polymer, such as polyethylene terephthalate, polybutylene terephthalate and polyethylene naphthalate, can become semi-crystalline, for example, through orientation, also known as stress induced crystallinity or heat induced crystallinity. It is well known that no plastic is completely crystalline and that the crystalline forms are more accurately described as semi-crystalline. The term semi-crystalline is well known and is meant to describe a polymer that exhibits X-ray patterns that have sharp features of crystalline regions and diffuse features characteristic of amorphous regions. It is also well known in the art that semi-crystalline should be distinguished from the pure crystalline and amorphous states. It is generally accepted that to keep the polymer crystallizable, the co-monomer content is usually kept below about 15 to 20 mole percent. However, not all polymers behave in this manner. For example PEI, or 100% polyethylene isophthalate is a non-crystallizable polymer.

The polyester polymers and copolymers may be prepared, for example, by melt phase polymerization involving the reaction of a diol with a dicarboxylic acid, or its corresponding diester. Various copolymers resulting from use of multiple diols and diacids may also be used. Polymers containing repeating units of only one chemical composition are homopolymers. Polymers with two or more chemically different repeat units in the same macromolecule are termed copolymers. The diversity of the repeat units depends on the number of different types of monomers present in the initial polymerization reaction. In the case of polyesters, copolymers include reacting one or more diols with a diacid or multiple diacids, and are sometimes referred to as terpolymers.

The Intrinsic Viscosity of the polyester polycondensation polymer is contemplated to be within the range of approximately 0.2 and approximately 1.2 dl/g. For example, one could make a film forming polyester of at least 0.45 dl/g, an intermediate feed I.V. of 0.49 to 0.59 dl/g, more preferably 0.52 to 0.56 dl/g. One could also make a polyester bottle resin of feed I.V. ranging from 0.59 to 0.69 dl/g, more preferably 0.61 to 0.64 dl/g, with a typical I.V. for bottles ranging from 0.72 to 0.84 dl/g, more preferably 0.74 to 0.82 dl/g. For packaging trays the typical I.V. ranges from 0.85 to 1.02 dl/g, more preferably from 0.89 to 0.95 dl/g. It is noted that while the measured I.V. of a polymer is a single value, that value represents the composite of the various molecule chain lengths. The typical I.V. increase during thermal processing is at least 0.1 dl/g, but can be as high as 0.2 dl/g or even as high as 0.4 dl/g. It should also be noted that there is no hard and fast rule as to when would stop the melt polycondensation and start the solid phase polycondensation. Typically, the melt polycondensation will stop at some point in the range of 0.45 dl/g to 0.65 dl/g. Solid phase polycondensation usually occurs in the presence of a driving force such as an inert gas or vacuum at a temperature range for a time sufficient to raise the intrinsic viscosity at least 0.03 dl/g, with most processes raising the intrinsic viscosity by at least 0.05 dUg.

Other polycondensation polymers can be the reaction product of dicarboxylic acids or esters with di-alcohols, diols, or anhydrides. The dicarboxylic acids include those comprising from about 4 to about 40 carbon atoms. Specific dicarboxylic acids include, but are not limited to, terephthalic acid, isophthalic acid, naphthalene 2,6-dicarboxylic acid, cyclohexanedicarboxylic acid, cyclohexanediacetic acid, diphenyl-4,4'-dicarboxylic acid, 1,3-phenylenedioxydiacetic acid, 1,2-phenylenedioxydiacetic acid, 1,4-phenylenedioxydiacetic acid, succinic acid, glutaric acid, adipic acid, azelaic

acid, sebacic acid, and the like. Specific esters include, but are not limited to, phthalic esters and naphthalic diesters.

These acids or esters may be reacted with an aliphatic diol preferably having from about 2 to about 24 carbon atoms, a cycloaliphatic diol having from about 7 to about 24 carbon atoms, an aromatic diol having from about 6 to about 24 carbon atoms, or a glycol ether having from 4 to 24 carbon atoms. Suitable diols include, but are not limited to, ethylene glycol, 1,4-butanediol, trimethylene glycol, 1,6-hexanediol, 1,4-cyclohexanedimethanol, diethylene glycol, resorcinol, 1,3-propanediol and hydroquinone.

One useful polyester is a crystallizable polyester with more than 85% of its acid units being derived from terephthalic acid. It is generally accepted that polyesters with greater than 15% comonomer modification are hard to crystallize. However, this invention includes polyesters which would crystallize and have more than 15% comonomer content.

Polyfunctional comonomers, such as anhydrides (also known as branching agents), can also be used, typically in amounts of from about 0.01 to about 3 mole percent. Suitable comonomers include, but are not limited to, trimellitic anhydride, trimethylolpropane, pyromellitic dianhydride (PMDA), and pentaerythritol. Polyester-forming polyacids or polyols can also be used. Blends of polyesters and copolyesters may also be useful in the present invention.

One suitable crystallizable polyester is polyethylene terephthalate (PET) or a copolymer modified with a metal sulfoisophthalate formed from the di-ester or di-carboxylic acid of the metal sulfoisophthalate in the approximately 1:1 stoichiometric reaction of acids, or their diesters, with ethylene glycol. Examples of the metal are lithium, sodium, and zinc.

Copolymers are also suitable. Specific copolymers and terpolymers of interest are crystallizable polyesters modified with lithium sulfoisophthalate in combinations of isophthalic acid or its diester, 2,6 naphthalate dicarboxylic acid or its diester, and/or cyclohexane dimethanol. The optimal levels of lithium sulfoisophthalate are within the range of 0.1 and 2.0 mole percent based upon the acid moiety.

The esterification or polycondensation reaction of the carboxylic acids or esters with glycol typically often takes place in the presence of a catalyst. To make the claimed copolymer composition one adds the metal compounds described above to any of the places where catalysts are added today. The practitioner is not limited to these addition points as other new points could be established through routine experimentation. This could be the beginning of the transesterification or esterification, prior to polycondensation, during polycondensation or just prior to pelletizing when the metal compound is to be used to catalyze just the solid phase polycondensation reaction.

Another preferred polycondensation polymer is polytrimethylene terephthalate (PTT). It can be prepared by, for example, reacting 1,3-propanediol with at least one aromatic diacid or alkyl ester thereof. Preferred diacids and alkyl esters include terephthalic acid (TPA) or dimethyl terephthalate (DMT). Accordingly, the PTT preferably comprises at least about 80 mole percent of either TPA or DMT. Other diols which may be copolymerized in such a polyester include, for example, ethylene glycol, diethylene glycol, 1,4-cyclohexane dimethanol, and 1,4-butanediol. In addition to the interfacial tension reducing agent such as sulfoisophthalic acid, other aromatic and aliphatic acids which may be used simultaneously to make a copolymer include, for example, isophthalic acid and sebacic acid.

The polycondensation polymers of this invention may also contain small amounts of phosphorous compounds, such as phosphates, and other compounds such as a cobalt compound, that tends to impart a blue hue. Also, small amounts of other polymers such as polyolefins can be tolerated in the continuous matrix.

After completion of the melt phase polymerization, the polymer is either formed into an article such as a film, an injected article or stranded and cut into smaller chips, such as pellets. The polymer is usually then crystallized and subjected to a solid phase (solid state) polymerization (SSP) step to achieve the intrinsic viscosity necessary for the manufacture of certain articles such as bottles. The crystallization and polymerization can be performed in a tumbler dryer reactor in a batch-type system. The solid phase polymerization can continue in the same tumble dryer where the polymer is subjected to high vacuum to extract the polymerization by-products

Alternatively, the crystallization and polymerization can be accomplished in a continuous solid state polymerization process whereby the polymer flows from one vessel to another after its predetermined treatment in each vessel. The crystallization conditions are relative to the polymer's crystallization and sticking tendencies. However, preferable temperatures are from about 100 °C to about 235 °C. In the case of crystallisable polyesters, the solid phase polymerization conditions are generally 10 °C below the melt point of the polymer. In the case of non-crystallisable polyesters, the solid phase polymerization temperature is generally about 10 °C below temperature where the polymer begins sticking to itself. While traditional solid phase polymerization temperatures for crystallisable polymers range from about 200 °C to about 232 °C, many operations are from about 215 °C to about 232 °C. Those skilled in the art will realize that the optimum solid phase polymerization temperature is polymer specific and depends upon the type and amount of copolymers in the product. However, determination of the optimum solid phase polymerization conditions is frequently done in industry and can be easily done without undue experimentation.

The solid phase polymerization may be carried out for a time sufficient to raise the intrinsic viscosity to the desired level, which will depend upon the application. For a typical bottle application, the preferred intrinsic viscosity (I.V.) is from about 0.65 to about 1.0 deciliter/gram, as determined by the method described in the methods section. The time required to reach this I.V. ranges from about 8 to about 21 hours.

Polyamides are another type of polycondensation polymer which could benefit from the metal compounds of this invention. These polyamides can be described as comprising the repeating unit amino caproic acid and/or A-D, wherein A is the residue of a dicarboxylic acid comprising adipic acid, isophthalic acid, terephthalic acid, 1,4-cyclohexanedicarboxylic acid, resorcinol dicarboxylic acid, or naphthalenedicarboxylic acid, or a mixture thereof, and D is a residue of a diamine comprising m-xylylene diamine, p-xylylene diamine, hexamethylene diamine, ethylene diamine, or 1,4 cyclohexanedimethylamine, or a mixture thereof.

These polyamides can range in number average molecular weight from 2000 to 60,000 as measured by end-group titration. These polyamides can also be described as the reaction product of amino caproic acid with itself and/or the reaction product of a residue of dicarboxylic acid comprising adipic acid, isophthalic acid, terephthalic acid, 1,4-cyclohexanedicarboxylic acid, resorcinol dicarboxylic acid, or naphthalenedicarboxylic acid, or a mixture thereof with a residue of a diamine comprising m-xylylene diamine, p-xylylene diamine, hexamethylene diamine, ethylene diamine, or 1,4 cyclohexanedimethylamine, or a mixture thereof.

Those skilled in the art will recognize many of the combinations as well known commercially available polyamides. The reaction product of the residue of sebacic acid with hexamethylene diamine is nylon 610 and the reaction product of the residue of adipic acid and hexamethylene diamine is nylon 66. Nylon 612 is another nylon which benefits from the invention. Nylon 6 is a special type of polyamide which is made by the opening of caprolactam and then polymerizing the resulting amino caproic acid which has a formula of $H_2N\text{-}(CH_2)_5\text{-}COOH$. One useful polyamide is the reaction product of the residues of adipic acid and m-xylylene diamine, known as poly-m-xylylene adipamide.

While the polycondensation reactions used to evaluate the catalytic effect of these new metal compounds is done in a batch manner, these metal compounds are believed suitable for catalyzing the reaction done in a continuous manner. The polyester melt polycondensation reaction used to evaluate the catalytic effect was conducted as follows:

> 1000 g of terephthalic acid (PTA or TPA) and 485.68 g of ethylene glycol (EG) (molar ratio of 1:1.13) were charged into a 2 L stainless steel reactor and the temperature increased to about 200 °C within 15 minutes. The reactor valve was then closed and temperature increased to about 240 °C within 60 minutes and the developed pressure was about 8 bars. The reactor was attached to a separation column which would allow the water to be removed. The column operated at approximately 120 °C. Esterification completed after approximately 2 hours. After esterification, the pressure was reduced to atmospheric pressure in short intervals. Water was collected in the receiver from the column with the desired degree of conversion reached 20 minutes under atmospheric pressure and approximately 260 °C. The experimental catalyst was dissolved or suspended in 30 g of Ethylene Glycol and added to the reactor. The amount and type of each catalyst is listed in table I. Pre-polycondensation was carried out for 20 minutes under vacuum of 5 mbar and temperature of 270 °C. After the temperature was increased to 275 °C (column temperature of 220 °C) polycondensation was carried out under vacuum of $10^{-2}$ mbar. The reaction was continued until the Torque reached a constant 15 Nm. The I.V. measured showed a very consistent I.V. with time being the main dependent variable.

The resulting polymer was measured for Intrinsic Viscosity (I.V. dl/g) by dissolving 1g of polymer into 100 ml of a 1:1 mixture of phenol: 1,1,2,2-tetrachlorethane. The I.V. was then measured using a Schott Ubbelohde viscometer Ia at 20 °C. The relative viscosity could then be directly converted using the Huggins equation.

$$IV = [-1 + (1 + 4k'\ \eta_{spec})]0.5/2k'c$$

Where $\eta_{spec} = \eta_{rel} - 1$

Using the constant k'=0.5 as found in Frind, H.; Faserforsch. Textiltechn., 5, 296 (1954) and where c is the concentration of the polymer in the solvent in grams polymer per 100 ml solvent.

Colour was measured in the CIELAB colour space.

The solid phase polymerization was accomplished in a solid state polymerization tube with dimensions of 30 mm ID x 220 mm height. The tube is immersed in heating oil with the nitrogen flowing first through the heating oil and then into the bottom of the tube. The tube is fitted with a frit which supports the polymer and evenly disperses the heated nitrogen. The reactor and nitrogen were preheated by setting the oil heater to 177 °C. 100 gms (approximately 130 mls) of polymer were added to the reactor and allowed to dry and crystallize at 177 °C for one hour with a $N_2$ flow at 7.6 liters/minute

After an hour of exposure, the polymer was removed from the reactor as quickly as possible. The polymer was returned to the reactor as quickly as possible and the oil temperature increased to 210 °C. The polymer was reheated to the desired reaction temperature over a period of approximately ten minutes. At this point a 10 ml sample was taken and designated as the Time = 0 hrs. Additional samples were taken over the cycle.

The results are presented in Table I. They demonstrate the remarkable catalytic behaviour and synergy of the catalysts, in particular the synergy of the ($i$-$C_4H_9)_2Si_2O_{12}TiOH$ with the Zinc metal ion, whether the Zinc ion is in the POSS form, or an oxide.

Table I

| Catalyst | | | Nrel | I.V. | Colour | | | Rxn Time | SSP Delta IV/hr |
|---|---|---|---|---|---|---|---|---|---|
| Conc | | | $\eta_{rel}$ | [η] | | | | H: min | Δ IV/hr |
| [mol-ppm] | ppm of metal | Type | | [dl/g] | L | A(-) | b | | |
| 100 | 136 | Zn Poss1 | 1.88 | 0.71 | 68 | 5.15 | 5.77 | 2:09 | 0.021 |
| 50 | 12.46 | Ti Poss1 | 1.86 | 0.69 | 62 | 6.21 | 11.48 | 1:41 | 0.034 |
| 30 | 7.47 | Ti Poss1 | 1.87 | 0.70 | 68 | 6.46 | 9.87 | 2:23 | 0.030 |
| 50 | 68 | Zn Poss1 | 1.90 | 0.72 | 68 | 5.78 | 6.86 | 4:37 | 0.010 |
| 50 | 12.46 | Ti Poss1 | 1.87 | 0.70 | 69 | 6.93 | 12.7 | 1:53 | 0.041 |
| | | | | | | | | | |
| 300 | 190 | $Sb(Ac)_3$ | 1.88 | 0.71 | 67 | 4.7 | 4.44 | 2:08 | 0.027 |
| | | | | | | | | | |
| 30 / 50 | 7.47 / 68 | Ti Poss 1 / Zn Poss1 | 1.86 | 0.69 | 63 | 6.06 | 8.84 | 1:12 | 0.032 |
| 30 / 30 | 7.47 / 41 | Ti Poss 1/ Zn Poss1 | 1.87 | 0.70 | 69 | 6.43 | 9.56 | 1:28 | 0.043 |
| 30 / 100 | 7.47 / 136 | Ti Poss 1/ Zn Poss1 | 1.85 | 0.69 | 69 | 6.06 | 8.39 | 1:02 | 0.036 |
| 15 / 100 | 7.47 / 136 | Ti Poss 1/ Zn Poss1 | 1.84 | 0.68 | 70 | 5.68 | 6.42 | 1:14 | 0.030 |
| 15 / 100 | 3.7 / 136 | $Ti(gly)_2$ / Zn Poss1 | 1.87 | 0.70 | 70 | 5.69 | 7.40 | 1:52 | 0.017 |
| 30 | 7.5 | $Ti(gly)_2$ | 1.90 | 0.72 | 66 | 5.37 | 7.99 | 3:12 | 0.016 |
| 400 | 136 | ZnO | 1.90 | 0.72 | 69 | 6.35 | 9.87 | 3.27 | 0.014 |
| 15 / 400 | 3.7 / 136 | Ti $(gly)_2$ / ZnO | 1.89 | 0.71 | 68 | 5.77 | 8.00 | 2:26 | 0.021 |
| 15 / 400 | 3.7 / 136 | Ti Poss1 / ZnO | 1.89 | 0.71 | 64 | 5.44 | 7.41 | 1:21 | 0.030 |

The prior art POSS metal compounds were likewise evaluated for their ability to function as polycondensation catalysts. The OH in ($i$-$C_4H_9)_7Si_7O_{12}TiOH$ was replaced with an alkoxide group (No. 7, 8 of Table 2) or a phenolate group as taught in the prior art (No. 10, 11, and 9 of Table 2). The unsuitability for a polymerization catalyst of the prior art was demonstrated by heating the samples (No 1,9, 10, 11 of Table 2) under vacuum at 220 °C. The ($i$-$C_4H_9)_7Si_7O_{12}TiOH$ remained a stable colorless liquid while the others degraded to yellow or decomposed altogether.

**Table 2. Overview of Ti, Zr and Ge POSS catalysts**

| No. | Name | R | R' | M | Wt% M | Mw | Mp (°C) |
|---|---|---|---|---|---|---|---|
| **1** | Isobutyl Titanium Hydroxy POSS (Ti-POSS1) | i-$C_4H_9$ | OH | Ti | 5.61 | 853.29 | ~40 |
| **2** | Cyclopentyl Titanium Hydroxy POSS | c-$C_5H_9$ | OH | Ti | 5.11 | 937.36 | 275 |
| **3** | Cyclohexyl Titanium Hydroxy POSS | c-$C_6H_{11}$ | OH | Ti | 4.62 | 1035.55 | 304 |
| **4** | Isobutyl Zirconium hydroxy POSS[a] | i-$C_4H_9$ | OH | Zr | 9.40 | 970.75 | glass |
| **5** | Isobutyl Germanium hydroxy POSS | i-$C_4H_9$ | OH | Ge | 8.27 | 878.00 | 152 |

(continued)

| No. | Name | R | R' | M | Wt% M | Mw | Mp (°C) |
|---|---|---|---|---|---|---|---|
| **6** | Isobutyl Titanium isopropoxy POSS | i-$C_4H_9$ | O-i-$C_3H_7$ | Ti | 5.35 | 895.37 | 200 |
| **7** | Cyclopentyl Titanium isopropoxy POSS | c-$C_5H_9$ | O-i-$C_3H_7$ | Ti | 4.89 | 979.44 | >310 |
| **8** | Cyclohexyl Titanium isopropoxy POSS | c-$C_6H_{11}$ | O-i-$C_3H_7$ | Ti | 4.44 | 1077.63 | >310 |
| **9** | Cyclopentyl titanium 4-Methylphenolate POSS | c-$C_5H_9$ | $OC_6H_4CH_3$-4 | Ti | 4.66 | 1027.49 | 230-233 decomposes |
| **10** | Cyclopentyl titanium 4-Fluorophenolate POSS | c-$C_5H_9$ | $OC_6H_4F$-4 | Ti | 4.64 | 1031.45 | 240-241 decomposes |
| **11** | Cyclopentyl titanium 4-Nitrophenolate POSS | c-$C_5H_9$ | $OC_6H_4NO_2$-4 | Ti | 4.52 | 1058.46 | 218-225 decomposes |
| **12** | Isobutyl Zirconium n-butoxy POSS[a] | i-$C_4H_8$ | O-n-$C_4H_9$ | Zr | 8.88 | 1026.86 | 200[b] |
| **13** | Isobutyl Germanium isopropoxy POSS | i-$C_4H_9$ | O-i-$C_3H_7$ | Ge | 7.89 | 920.08 | 262 |

Compounds Nos. 2, 3, and 7 to 11 are reference compounds not according to the invention. The prior art POSS samples were also evaluated for their catalytic behaviour as well. No 7 and 8 yielded a PET with unacceptable color. No. 9, 10, and 11 provided a melt PET with an acceptable color, but suffer from the decomposition issues noted earlier.

The compounds No 2 and 5 can be made in a similar manner as the Ti-POSS1. However, synthesis of compound 2, which is derived from a cyclopentyl trisilanol POSS, requires large amounts of solvent. The activities for the melt polycondensation reaction are Ge~Ti>Zr. Both Ge and Zr produce a colorless PET. For Zr, there may be a synergy in combination with Zn or Al. There was no observed synergy for Ge.

## Claims

1. A polycondensation polymer composition comprising a polycondensation polymer and at least one metal compound selected from the group consisting of $R_7Si_7O_{12}Al$, $R_7Si_7O_{12}TiOH$, $(R_7Si_7O_{12})_2Zn_4Me_2$, $R_7Si_7O_{12}Zr(O\text{-}i\text{-}C_3H_7)$, and $R_7Si_7O_{12}Ge(O\text{-}i\text{-}C_3H_7)$ wherein R is selected from the group consisting of (i-$C_4H_9$) and phenyl that allow at least one solvent selected from the group consisting of ethanol, isopropanol, acetone, THF, and acetonitrile to contain at least 50 gms of $R_7Si_7O_9(OH)_3$ per 1000gm of the solvent at 50 °C.

2. The polycondensation polymer of claim 1, wherein the polycondensation polymer is a naphthalate or phthalate polyester.

3. The polycondensation polymer of claim 1, wherein the polycondensation polymer is a polyamide.

4. The polycondensation polymer composition of claim 1, wherein said composition further comprises a zinc compound.

5. The polycondensation polymer of claim 4, wherein the polycondensation polymer is a naphthalate or phthalate polyester.

6. A process for the polycondensation polymerization of a polycondensation polymer comprising the steps of introducing at least one metal compound selected from the group consisting of $R_7Si_7O_{12}Al$, $R_7Si_7O_{12}TiOH$, $(R_7Si_7O_{12})_2Zn_4Me_2$, $R_7Si_7O_{12}Zr(O\text{-}i\text{-}C_3H_7)$, and $R_7Si_7O_{12}Ge(O\text{-}i\text{-}C_3H_7)$ wherein R is selected from the group consisting of (i-$C_4H_9$) and phenyl that allow at least one solvent selected from the group consisting of ethanol, isopropanol, acetone, THF, and acetonitrile to contain at least 50 gms of $R_7Si_7O_9(OH)_3$ per 1000 gms of the solvent at 50 °C. into the polycondensation

polymer,
exposing the polycondensation polymer to a sufficient temperature and a sufficient pressure for a time sufficient to raise the intrinsic viscosity of the polycondensation polymer by at least 0.05 dl/g.

**7.** The process of claim 6, wherein the polycondensation polymer is a naphthalate or phthalate polyester.

**8.** The process of claim 6, wherein the polycondensation polymer is a polyamide.

**9.** The process of claim 6, wherein a zinc compound is introduced into the polycondensation polymer.

**10.** The process of claim 9, wherein the polycondensation polymer is a naphthalate or phthalate polyester.

**11.** The process of any one of claims 9 and 10, wherein the metal compound is $R_7Si_7O_{12}Al$.

**12.** The process of any one of claims 9 and 10, wherein the metal compound is $R_7Si_7O_{12}TiOH$.

**13.** The process of any one of claims 9 and 10, wherein the metal compound is $(R_7Si_7O_{12})_2Zn_4Me_2$.

**14.** The process of any one of claims 9 and 10, wherein the metal compound is $R_7Si_7O_{12}Zr(O\text{-}i\text{-}C_3H_7)$.

**15.** The process of any one of claims 9 and 10, wherein the metal compound is $R_7Si_7O_{12}Ge(O\text{-}i\text{-}C_3H_7)$.

**Patentansprüche**

**1.** Polykondensationspolymerzusammensetzung, die ein Polykondensationspolymer und mindestens eine Metallverbindung umfasst, die aus der Gruppe, bestehend aus $R_7Si_7O_{12}Al$, $R_7Si_7O_{12}TiOH$, $(R_7Si_7O_{12})_2Zn_4Me_2$, $R_7Si_7O_{12}Zr(O\text{-}i\text{-}C_3H_7)$ und $R_7Si_7O_{12}Ge(O\text{-}i\text{-}C_3H_7)$, ausgewählt ist, wobei R aus der Gruppe, bestehend aus (i-$C_4H_9$) und Phenyl, ausgewählt ist, die ermöglichen, dass mindestens ein Lösungsmittel, das aus der Gruppe, bestehend aus Ethanol, Isopropanol, Aceton, THF und Acetonitril, ausgewählt ist, mindestens 50 g $R_7Si_7O_9(OH)_3$ pro 1000 g des Lösungsmittels bei 50 °C enthält.

**2.** Polykondensationspolymer nach Anspruch 1, wobei das Polykondensationspolymer ein Naphthalat- oder Phthalatpolyester ist.

**3.** Polykondensationspolymer nach Anspruch 1, wobei das Polykondensationspolymer ein Polyamid ist.

**4.** Polykondensationspolymerzusammensetzung nach Anspruch 1, wobei die Zusammensetzung ferner eine Zinkverbindung umfasst.

**5.** Polykondensationspolymer nach Anspruch 4, wobei das Polykondensationspolymer ein Naphthalat- oder Phthalatpolyester ist.

**6.** Verfahren zur Polykondensationspolymerisation eines Polykondensationspolymers, umfassend die Schritte des Einbringens mindestens einer Metallverbindung, die aus der Gruppe, bestehend aus $R_7Si_7O_{12}Al$, $R_7Si_7O_{12}TiOH$, $(R_7Si_7O_{12})_2Zn_4Me_2$, $R_7Si_7O_{12}Zr(O\text{-}i\text{-}C_3H_7)$ und $R_7Si_7O_{12}Ge(O\text{-}i\text{-}C_3H_7)$, ausgewählt ist, wobei R aus der Gruppe, bestehend aus (i-$C_4H_9$) und Phenyl, ausgewählt ist, die ermöglichen, dass mindestens ein Lösungsmittel, das aus der Gruppe, bestehend aus Ethanol, Isopropanol, Aceton, THF und Acetonitril, ausgewählt ist, mindestens 50 g $R_7Si_7O_9(OH)_3$ pro 1000 g des Lösungsmittels bei 50 °C enthält, in das Polykondensationspolymer,
Aussetzens des Polykondensationspolymers gegenüber einer ausreichenden Temperatur und einem ausreichenden Druck für eine ausreichende Zeit, so dass die intrinsische Viskosität des Polykondensationspolymers um mindestens 0,05 dl/g erhöht wird.

**7.** Verfahren nach Anspruch 6, wobei das Polykondensationspolymer ein Naphthalat-oder Phthalatpolyester ist.

**8.** Verfahren nach Anspruch 6, wobei das Polykondensationspolymer ein Polyamid ist.

**9.** Verfahren nach Anspruch 6, wobei eine Zinkverbindung in das Polykondensationspolymer eingeführt wird.

**10.** Verfahren nach Anspruch 9, wobei das Polykondensationspolymer ein Naphthalat-oder Phthalatpolyester ist.

**11.** Verfahren nach einem der Ansprüche 9 und 10, wobei die Metallverbindung $R_7Si_7O_{12}Al$ ist.

**12.** Verfahren nach einem der Ansprüche 9 und 10, wobei die Metallverbindung $R_7Si_7O_{12}TiOH$ ist.

**13.** Verfahren nach einem der Ansprüche 9 und 10, wobei die Metallverbindung $(R_7Si_7O_{12})_2Zn_4Me_2$ ist.

**14.** Verfahren nach einem der Ansprüche 9 und 10, wobei die Metallverbindung $R_7Si_7O_{12}Zr(O\text{-}i\text{-}C_3H_7)$ ist.

**15.** Verfahren nach einem der Ansprüche 9 und 10, wobei die Metallverbindung $R_7Si_7O_{12}Ge(O\text{-}i\text{-}C_3H_7)$ ist.

## Revendications

**1.** Composition de polymère de polycondensation comprenant un polymère de polycondensation et au moins un composé métallique choisi dans le groupe constitué de $R_7Si_7O_{12}Al$, $R_7Si_7O_{12}TiOH$, $(R_7Si_7O_{12})_2Zn_4Me_2$, $R_7Si_7O_{12}Zr(O\text{-}i\text{-}C_3H_7)$, et $R_7Si_7O_{12}Ge(O\text{-}i\text{-}C_3H_7)$ dans laquelle R est choisi dans le groupe constitué de (i-$C_4H_9$) et phényle permettant à au moins un solvant choisi dans le groupe constitué de l'éthanol, de l'isopropanol, de l'acétone, du THF et de l'acétonitrile de contenir au moins 50 g de $R_7Si_7O_9(OH)_3$ pour 1000 g du solvant à 50 °C.

**2.** Polymère de polycondensation selon la revendication 1, dans lequel le polymère de polycondensation est un polyester de naphtalate ou de phtalate.

**3.** Polymère de polycondensation selon la revendication 1, dans lequel le polymère de polycondensation est un polyamide.

**4.** Composition de polymère de polycondensation selon la revendication 1, dans laquelle ladite composition comprend en outre un composé de zinc.

**5.** Polymère de polycondensation selon la revendication 4, dans lequel le polymère de polycondensation est un polyester de naphtalate ou de phtalate.

**6.** Procédé pour la polymérisation par polycondensation d'un polymère de polycondensation comprenant les étapes d'introduction d'au moins un composé métallique choisi dans le groupe constitué de $R_7Si_7O_{12}Al$, $R_7Si_7O_{12}TiOH$, $(R_7Si_7O_{12})_2Zn_4Me_2$, $R_7Si_7O_{12}Zr(O\text{-}i\text{-}C_3H_7)$, et $R_7Si_7O_{12}Ge(O\text{-}i\text{-}C_3H_7)$ dans lequel R est choisi dans le groupe constitué de (i-$C_4H_9$) et phényle permettant à au moins un solvant choisi dans le groupe constitué de l'éthanol, de l'isopropanol, de l'acétone, du THF et de l'acétonitrile de contenir au moins 50 g de $R_7Si_7O_9(OH)_3$ pour 1000 g de solvant à 50 °C dans le polymère de polycondensation,
d'exposition du polymère de polycondensation à une température suffisante et une pression suffisante pendant une durée suffisante pour accroître la viscosité intrinsèque du polymère de polycondensation d'au moins 0,05 dl/g.

**7.** Procédé selon la revendication 6, dans lequel le polymère de polycondensation est un polyester de naphtalate ou de phtalate.

**8.** Procédé selon la revendication 6, dans lequel le polymère de polycondensation est un polyamide.

**9.** Procédé selon la revendication 6, dans lequel un composé de zinc est introduit dans le polymère de polycondensation.

**10.** Procédé selon la revendication 9, dans lequel le polymère de polycondensation est un polyester de naphtalate ou de phtalate.

**11.** Procédé selon l'une quelconque des revendications 9 et 10, dans lequel le composé métallique est $R_7Si_7O_{12}Al$.

**12.** Procédé selon l'une quelconque des revendications 9 et 10, dans lequel le composé métallique est $R_7Si_7O_{12}TiOH$.

**13.** Procédé selon l'une quelconque des revendications 9 et 10, dans lequel le composé métallique est $(R_7Si_7O_{12})_2Zn_4Me_2$.

**14.** Procédé selon l'une quelconque des revendications 9 et 10, dans lequel le composé métallique est $R_7Si_7O_{12}Zr(O\text{-}i\text{-}C_3H_7)$.

**15.** Procédé selon l'une quelconque des revendications 9 et 10, dans lequel le composé métallique est $R_7Si_7O_{12}Ge(O\text{-}i\text{-}C_3H_7)$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5750741 A
- US 6972312 B


### Non-patent literature cited in the description


- **FEHER.** *Polyhedron,* 1995, 3239-3253
- **FRIND, H.** *Faserforsch. Textiltechn.,* 1954, vol. 5, 296